# EUROPEAN PATENT SPECIFICATION

(11) **EP 0 580 929 B1**
(45) Date of publication and mention of the grant of the patent: **20.06.2001**
(21) Application number: 92830435.1
(22) Date of filing: 31.07.1992
(51) Int. Cl.: E04B 1/58, E04F 11/18, F16B 7/04, F16B 12/40

(54) **An assembly of elements for the connection of sections to form three-dimensional structures with dismountable joints**
Elementenzusammenbau für die Verbindung von Elementen zur Herstellung einer dreidimensionalen Struktur mit lösbaren Verbindungen
Assemblage d'éléments pour la fixation de sections de façon à former des structures à trois dimensions à raccords démontables

(43) Date of publication of application: 02.02.1994
(73) Proprietor: GROTTINI S.n.c. DI GROTTINI PIETRO & C., 60025 Loreto (AN) (IT)
(72) Inventor: Grottini, Pietro, Porto Potenza Picena (MC) (IT)
(74) Representative: Lanzoni, Luciano

(56) References cited:
- DE-A- 3 636 639
- GB-A- 1 066 260

## Description

The invention relates to a connecting elements assembly to form three dimensional structures with dismountable joints, comprising at least one three dimensional connecting element which is provided with first jaws having concave surfaces oriented along three distinct spatial directions; joint coverings whereof at least one is provided with a second jaw which can be associated to the jaws of the first three dimensional connecting element; and clamping organs provided to connect said joint coverings to the three dimensional connecting element.

The three-dimensional structures with dismountable joints of the above-mentioned type are frequently used for realising multi-use provisional structures, such as, for example, scaffoldings for storing and depositing work equipment, machine parts etc., or for displaying products on sale in large stores.

In assemblies of connections of the above-mentioned type, the gripping surfaces of the three-dimensional connection elements are conformed in such a way as to be symmetrical with respect to oblique lines to the axes of the sections connected by the clamping surfaces of the connection elements and the relative joint coverings.

The friction force developed between the joint gripping surfaces is thus the result of two component actions constituted by the grip exerted on two clamping surface couples of the connection assembly, since the said friction force depends on two contemporaneous actions and is expressed only at the point of clamping of the two couples of the said surfaces.

Consequently, all the sections which make up a structural joint in known connection assemblies must be contemporaneously connected among themselves.

It thus results that structures realisable with known connection assemblies must be installed all at once, and are laborious to mount and dismount since each joint requires, even in cases having the simplest geometry, the efforts of at least two operators: one to hold and correctly and reciprocally position the sections, the other to activate the clamping organs of the connection assembly.

Such characteristics involve high costs for the mounting and dismounting of the structure both due to work costs and because of the long times needed to assemble each joint.

Furthermore, the need to effect the mounting operation all together incurs further increases in the costs where the structures are destined to be high, since their mounting is awkward and slow both because of the height of the structure and the safety measures which the operators must observe to avoid accidents.

An assembly for the connection of sections to form three dimensional structures with dismountable joints of the type described in the prior art portion of claim 1 is known from DE-3 636 639 Al. The above mentioned document shows a variety of assemblies each of which is addressed to make a specific type of structural joint. The assemblies are provided with three-dimensional connecting element, shaped in various ways, which clamp the sections in combination with joint coverings.

Said feature disadvantageously implies the management of numberous different assemblies which increases the costs for making structures.

Further, all the assemblies are provided with joint coverings which are connected to the three-dimensional connecting element by two bolts which are the cause of long times needed to assemble each joint.

Aim of the present invention, as it is
characterised in the claims, is that of eliminating the above-mentioned drawbacks. The invention solves the problem according to the features of claim 1.

The connection assembly further envisages joint coverings, equipped with a a single second clamping jaw, connectable to the three-dimensional connection element independently of the gripping of the remaining first and second clamping and gripping surfaces of the assembly, so that the mounting of each section, between the three-dimensional connection element and the joint coverings equipped with a single clamping jaw, can be realised independently of the mounting of the remaining sections making up the joint.

The fundamental advantage of the invention, deriving from the gradualness of the section mounting to make up the joint, is represented by the possibility of permitting one single operator to mount and dismount the structure, while the said structure still boasts complex joints.

Furthermore, structures realised with the invention can advantageously y be partially y mounted at ground level, in comfortable working conditions, thus allowing more accurate and precise as well as faster positioning of the structural joints.

A further advantage is constituted by the fact that the three-dimensional connecting element is conformed in such a way as to permit of easier hiding of the joint lines of the constituting parts of the assembly, which are not aesthetically y attractive, particular where the structure is destined to furnish shops or in any case where the public has access.

A further advantage of the invention is represented by the possibility of realising structures having dimensionally differing sections, in relation to the different loading conditions which the single sections of each structural joint are subjected to.

Further advantages of an embodiment of the invention will better emerge from the detailed description that follows, made with reference to the accompanying drawings, which represent a preferred embodiment here illustrated in the form of a non-limiting example, and in which:
- figure 1 shows a connection assembly in plan view;
- figure 2 shows a variant of the assembly of figure 1, in plan view;
- figures 3A, 3B, 3C show respectively a plan view, and perspective view and a side view of a component of the connection assembly according to the invention;
- figures 4A, 4B show respectively, according to a plan view and a perspective view, two elements of figures 3A, 3B and 3C mutually associated to make a structural joint;
- figure 5 shows a perspective view of a particular of the invention represented in figures one and two;
- figure 6 shows a variation of the connection assembly of figure 1, shown in plan view.

With reference to the drawings, the embodiment of the invention substantially consists in an assembly 2 of connecting elements of sections 1 for forming three-dimensional structures having dismountable joints 4. It envisages a three-dimensional connecting element 5 having first clamping jaws 6s and first gripping jaws 6t of the sections 1 equipped with corresponding clamping surfaces 7s and gripping surfaces 7t, shaped to complement the edge of the said sections 1 so as to permit of reciprocal connection in the joints 4 with axis lines 1a converging into a common vertex 8.

The assembly 2 further comprises joint-coverings 9 having second clamping jaws 10s and second gripping jaws 10t for the sections 1 equipped with corresponding second clamping and gripping surfaces 11s, 11t, shaped to complement the edge of the sections 1.

The joint-coverings 9 are associable to the three-dimensional connecting element 5 and to the sections 1, interposed between them, by means of conventional clamping organs 12 interacting between the first and the second clamping jaws 6s, 10s.

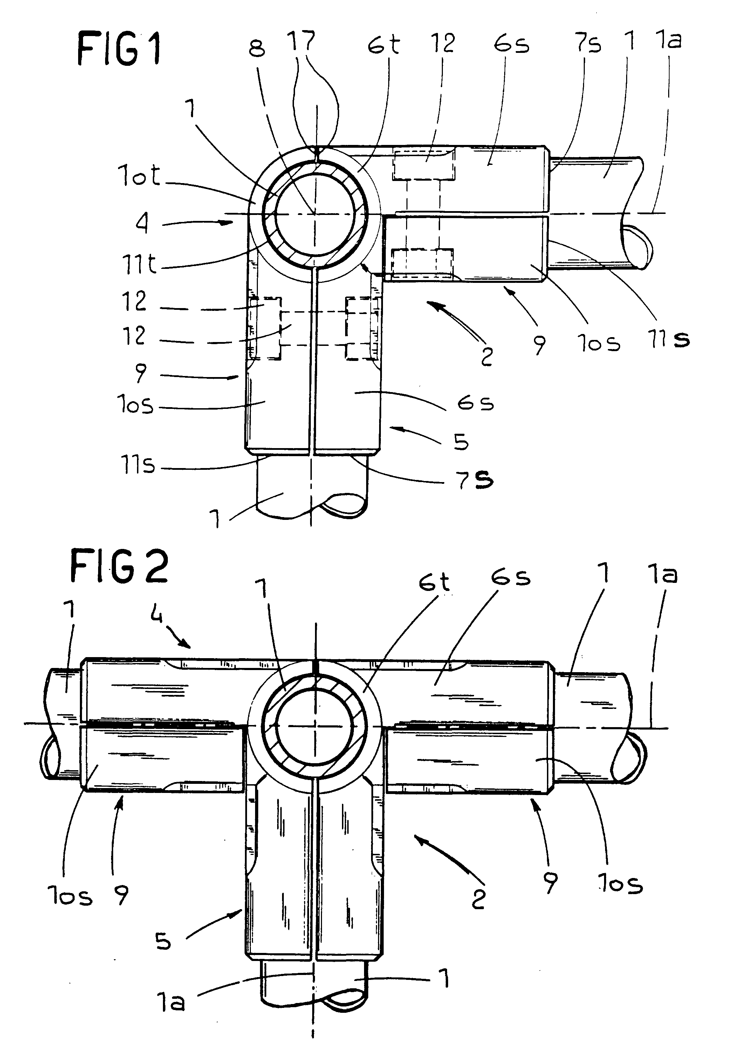

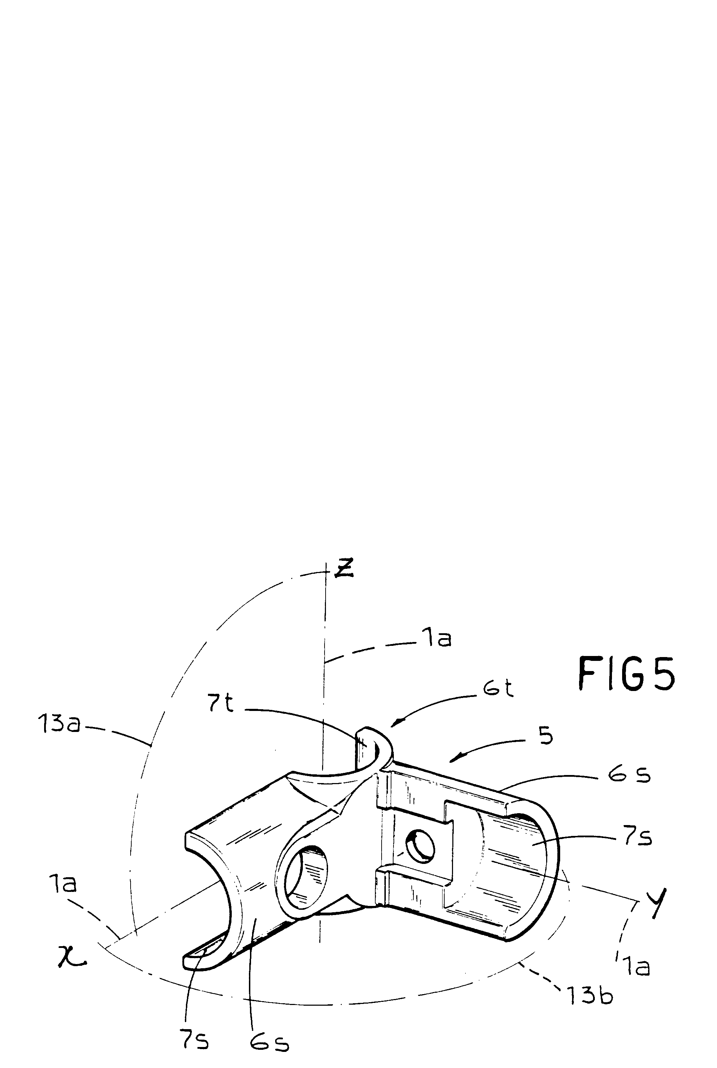

With reference to figures 1 and 5, it can be seen that the first clamping surfaces 7s and the first gripping surfaces 7t are symmetrical with respect to planes containing the axis lines 1a of at least two sections 1 in a structural joint 4, so as to enable the said first clamping jaws 6s and first gripping jaws 6t to associate with the sections 1 only in directions which are parallel to the axis line 1a of one of them.

At least one of the joint-coverings 9 of the assembly 2 is equipped with a single second clamping jaw 10s and the said joint-covering 9 is associable to the three-dimensional connecting element 5 by means of the said clamping organs 12 independently of the clamping of the remaining first and second clamping surfaces 7s, 7t and clamping jaws 10s and gripping jaws 10t of the assembly 2. This means that the relative interpositioned section 1 can be mounted independently of the mounting of the remaining sections 1 which will be inserted in the joint 4.

From figures 1 and 5 it can also be noted that the first clamping surfaces 7s and gripping surfaces 7t of two corresponding first clamping jaw 6s and first gripping jaw 6t of a same three-dimensional connecting element 5 have their concavities equally oriented, according to a direction of a circumference 13a disposed coplanarly with the axis lines 1a of the sections 1 adjacent to the said clamping surfaces 7s and gripping surfaces 7t and centred at the vertex 8 of intersection of the said axis lines 1a.

An analogous characteristic can be noted between just the first clamping surfaces 7s of the three-dimensional connecting element 5. Still with reference to figure 5, it can be observed that two first clamping jaws 6s of the three-dimensional connecting element 5 have their concavities equally oriented according to a circumference 13b coplanar to the axis lines la of the tubular sections 1 connected by the said first clamping surfaces 7s. Also this circumference 13b is centred at the vertex 8 of intersection of the said axis lines 1a.

These last characteristics grant to the assembly 2 the possibility of arranging the said first clamping jaws 6s of the three-dimensional connecting element 5 one on the extrados and one on the intrados of the tubular sections 1 connected by the three-dimensional connecting element 5, as is visible in figure 1. This is seen, from the aesthetic point of view, as a better hiding of the joint lines between the parts. Indeed, as can be seen in figure 2, the joint as seen from the outside of the structure joint 4 is defined only by two very close joint lines 17, belonging to the first and to the second gripping jaws 6t, 10t of the three-dimensional connecting element 5 and of the joint-coverings 9.

The said joint lines 17, because of the conformation of the assembly 2 and following the clamping action, can close up until there exists only a minimum reciprocal distance, so as to confer on the joint a pleasant apparent continuity which makes it particularly appreciable for use as a visible structure such as those used in shop furnishing or in any case in places accessible to the public.

In the accompanying figures, the three-dimensional connecting element 5 is represented in a first embodiment which envisages that the first clamping jaws 6s are arranged at right-angles. Alternative forms, however, are possible for the three-dimensional connecting 9 element 5, in which the said first clamping jaws 6s are arranged at a straight angle, or more generally y at an acute angle. The connecting assemblies 2 made in this way advantageously permit of realising spatial structural connections, even of quite complex geometric characteristics, in which the sections 1 which meet in the joints 4 are connectable one successively to another.

Figure 5 further shows that the concavities of the first clamping surfaces 7s and gripping surfaces 7t, apart from being equally directed, are shaped in such a way as to be reciprocally superimposable, according to the said circumferences 13a and 13b, with the aim of permitting the connnection of the joints 4 of sections 1 having their edges geometrically and dimensionally aqual. In any case it can be easily deduced that the said clamping surfaces 7s and gripping surfaces 7t, while maintaining the same orientation of their respective concavities, could be conformed also in such a way as to be associable to differently-shaped sections 1 and/or differently dimensioned sections 1 in relation to the different degrees of stress that the weights bearing on the structure exert on the sections 1 meeting in the joints 4.

The assembly 2 illustrated in figure 1 represents a so-called four-way joint 4 usable for styling of end pieces of three-dimensional structures having a parallelepiped shape.

For the formation of the joints 4 relative to the intermediate styling of the said structures it is necessary to make, as is known, so-called 5-way joints, such as that shown in figure 2, which can be made very simply by associating among themselves, in reciprocal contraposition, two three-dimensional connecting elements 5, each equipped with the relative joint-coverings 9 having a single clamping jaw 10s.

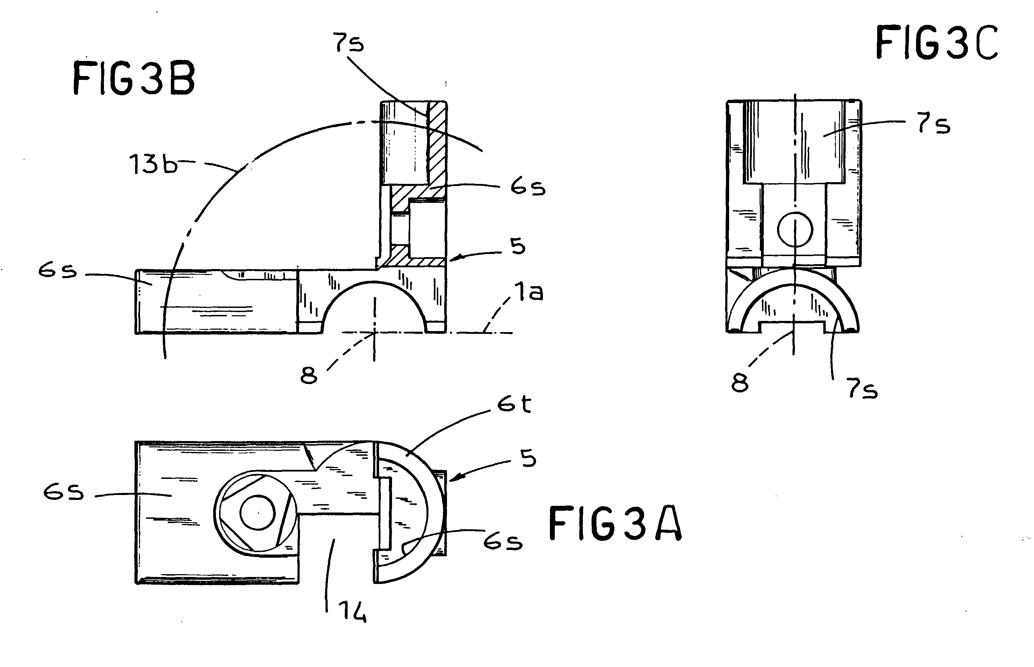

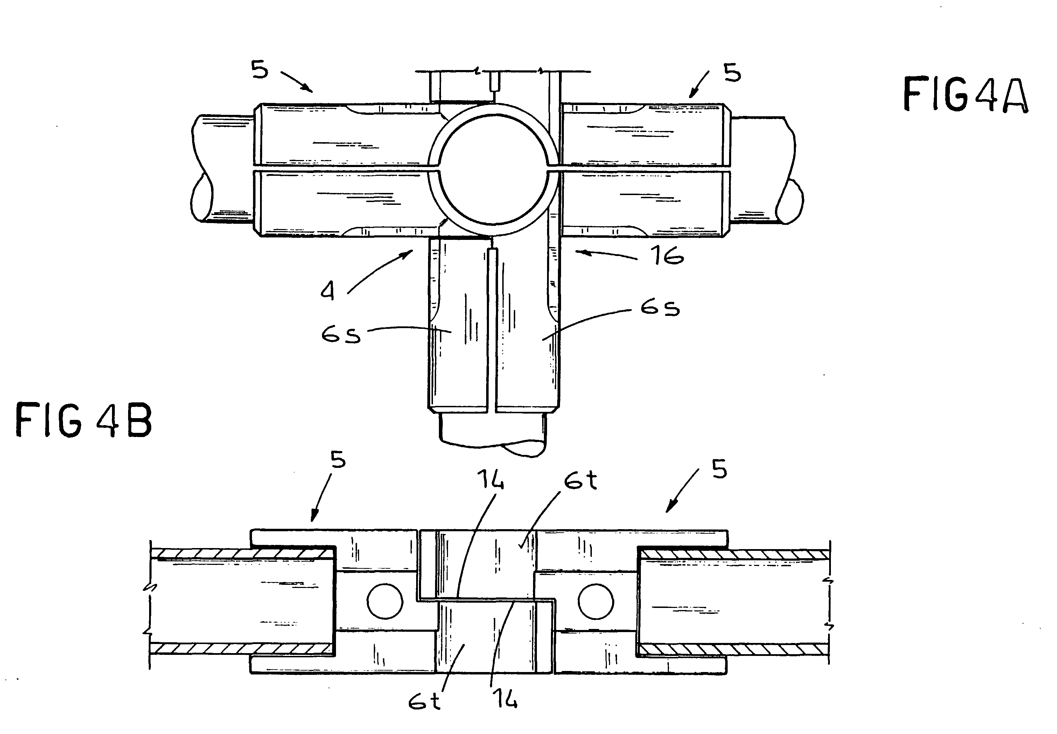

Figures 3A, 3B, 3C show a further embodiment of the three-dimensional connecting element 5 which envisages, in the body of the element 5 itself, a trench 14 to allow two identically-shaped connection elements 5 5 (figures 4A and 4B) to superimpose one on the other setting a respective first clamping jaw 6s couple one against the other. This permits of realising connections of the "flange" type, superimposingly associating two three-dimensional connecting elements 5 equipped with trenches 14 on the same section 1, as in figure 4B.

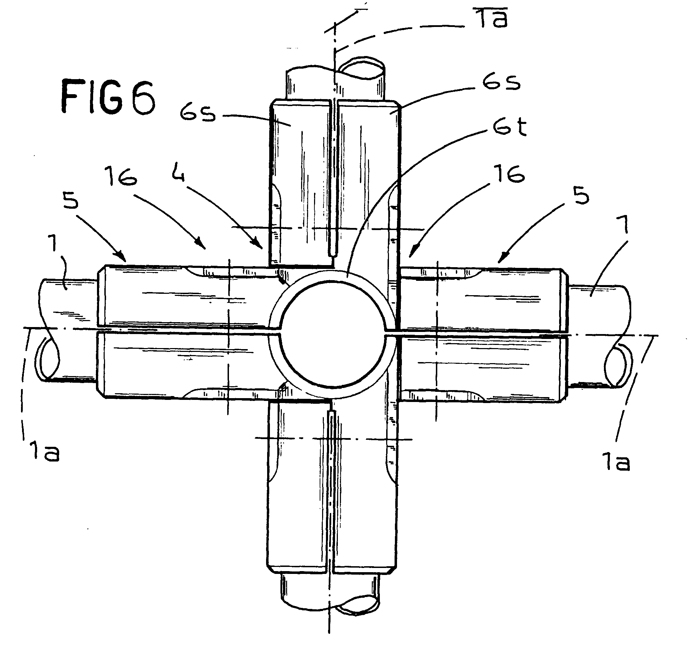

Figure 6 shows that, by combining four three-dimensional connecting elements 5 equipped with trenches 14 in the above-described way, that is, setting their respective first clamping jaws 6s among themselves, it is possible to obtain "six-way" structural joints 4.

## Claims

1. Connecting elements assembly (2) to form three dimensional structures with dismountable joints (4), comprising at least one three dimensional connecting element (5) which is provided with first jaws (6s, 6t) having concave surfaces (7s,7t) oriented along three distinct spatial directions (x,y,z); joint coverings (9) whereof at least one is provided with a second jaw (10s, 10t) which can be associated to the jaws (6s,6t) of the first three dimensional connecting element (5); and clamping organs (12) provided to connect said joint coverings (9) to the three dimensional connecting element (5), characterised in that said clamping organs comprise a single screw (12) positioned between the three dimensional connecting element (5) and each joint covering (9), said three dimensional connecting element (5) being so shaped as to contrast the rotation around the screw (12) of the joint covering (9) fitted with a single said second jaw (10s) correspondingly maintaining said joint covering (9) essentially aligned with the first jaw (6s) to which the joint covering (9) is associated.

2. Assembly, according to claim 1, characterised in that said first jaws (6s,6t) are positioned in such a way as to concur in a common vertex (8).

3. Assembly, according to claim 1, characterised in that the three spatial directions (x,y,z) are orthogonal with respect to one another.

4. Assembly, according to claim 1, characterised in that it comprises two said three dimensional connecting elements (5) which are associated to each other with the respective first jaws (6s, 6t) opposed and tightened by a single screw (12) in a way able to form an overall "5" way structural joint (4).

5. Assembly, according to claim 1, characterised in that said three dimensional connecting element (5) is provided with a trench (14).

6. Assembly, according to claim 5, characterised in that it comprises two said three dimensional connecting elements (5) which are mounted with the respective trenches (14) mutually opposite so as to define, in combination, a flange connecting joint (4).

7. Assembly, according to claim 1, characterised in that at least two first jaws (6s,6t) of said three dimensional connecting element (5) are set at an acute angle.

8. Assembly, according to claim 1, characterised in that at least two first jaws (6s,6t) of said three dimensional connecting element (5) are set at a right angle.

9. Assembly, according to claim 1, characterised in that at least two said first jaws (6s) of a same three dimensional connecting element (5) are set at a flat angle.

## Patentansprüche

1. Elementenzusammenbau (2) zur Herstellung von dreidimensionalen Strukturen mit lösbaren Verbindungen (4), enthaltend wenigstens ein dreidimensionales Verbindungselement (5), welches mit ersten Klemmbacken (6s, 6t) mit konkaven Oberflächen (7s, 7t) versehen, orientiert entlang drei unterschiedlichen räumlichen Richtungen (x, y, z); Abdeckungen (9), von denen wenigstens eine mit einer zweiten Klemmbacke (10s, 10t) versehen ist, die den Klemmbacken (6s, 6t) des ersten dreidimensionalen Verbindungselementes (5) zugeordnet werden kann; sowie Klemmelemente (12), dazu vorgesehen, die genannte Abdeckung (9) mit dem genannten dreidimensionalen Verbindungselement (5) zu verbinden, **dadurch gekennzeichnet,** dass die genannten Klemmelemente (12) eine einzige Schraube (12) enthalten, eingesetzt zwischen dem dreidimensionalen Verbindungselement (5) und einer jeden Abdeckung (9), wobei das genannte dreidimensionale Verbindungselement (5) so ausgebildet ist, dass es der Umdrehung der Abdeckung (9) um die Schraube (12) entgegenwirkt, welche Abdeckung mit einer einzigen genannten zweiten Klemmbacke (10s) befestigt ist, welche die genannte Abdeckung (9) im wesentlichen zu der ersten Klemmbacke (6s) ausgerichtet hält, welcher die Abdeckung (9) zugeordnet ist.

2. Zusammenbau nach Patentanspruch 1, **dadurch gekennzeichnet,** dass die genannten ersten Klemmbacken (6s, 6t) auf solche Weise positioniert sind, dass sie an einer gemeinsamen Spitze (8) zusammenlaufen.

3. Zusammenbau nach Patentanspruch 1, **dadurch gekennzeichnet,** dass die drei räumlichen Richtungen (x, y, z) rechtwinklig zueinander verlaufen.

4. Zusammenbau nach Patentanspruch 1, **dadurch gekennzeichnet,** dass er zwei genannte dreidimensionale Verbindungselemente (5) enthält, welche durch die jeweiligen, sich gegenüberliegenden ersten Klemmbacken (6s, 6t) miteinander verbunden und durch eine einzige Schraube (12) befestigt sind, und zwar auf eine solche Weise, dass sie in der Lage sind, insgesamt eine "5"-Wege-Verbindung (4) zu schaffen.

5. Zusammenbau nach Patentanspruch 1, **dadurch gekennzeichnet,** dass das genannte dreidimensionale Verbindungselement (5) mit einer Rinne (14) versehen ist.

6. Zusammenbau nach Patentanspruch 5, **dadurch gekennzeichnet,** dass es zwei genannte dreidimensionale Verbindungselemente (5) enthält, welche mit den jeweiligen Rinnen (14) sich gegenseitig gegenüberliegend montiert sind, so dass sie kombiniert eine Flanschverbindung (4) bilden.

7. Zusammenbau nach Patentanspruch 1, **dadurch gekennzeichnet,** dass wenigstens zwei erste Klemmbacken (6s, 6t) des genannten dreidimensionalen Verbindungselementes (5) in einem spitzen Winkel angeordnet sind.

8. Zusammenbau nach Patentanspruch 1, **dadurch gekennzeichnet,** dass wenigstens zwei erste Klemmbacken (6s, 6t) des genannten dreidimensionalen Verbindungselementes (5) in einem rechten Winkel angeordnet sind.

9. Zusammenbau nach Patentanspruch 1, **dadurch gekennzeichnet,** dass wenigstens zwei genannte erste Klemmbacken (6s) eines gleichen dreidimensionalen Verbindungselementes (5) in einem flachen Winkel angeordnet sind.

## Revendications

1. Assemblage d'éléments de fixation (2) pour former des structures tridimensionnelles à raccords démontables (4), comprenant au moins un élément de fixation tridimensionnel (5) pourvu de premières mâchoires (6s, 6t) ayant des surfaces concaves (7s, 7t) orientées dans trois directions spatiales distinctes (x, y, z); des couvre-joints (9) dont au moins l'un d'entre eux est pourvu d'une seconde mâchoire (10s, 10t) pouvant être associée aux mâchoires (6s, 6t) du premier élément de fixation tridimensionnel (5); et des organes de serrage (12) servant à fixer lesdits couvre-joints (9) aux éléments de fixation tridimensionnels (5),caractérisé en ce que lesdits organes de serrage comprennent un écrou (12) positionné entre l'élément de fixation tridimensionnel (5) et chaque couvre-joint (9), ledit élément de fixation tridimensionnel (5) étant conformé de manière à contraster la rotation autour de la vis (12) du couvre-joint (9) pourvu d'une seule seconde mâchoire (10s) maintenant ledit couvre-joint (9) aligné avec la première mâchoire (6s) à laquelle le couvre-joint (9) est associé.

2. Assemblage selon la revendication 1, caractérisé en ce que lesdites premières mâchoires (6s, 6t) sont positionnées de manière à concourir en un sommet (8) commun.

3. Assemblage selon la revendication 1, caractérisé en ce que les trois directions spatiales (x, y, z) sont orthogonales entre elles.

4. Assemblage selon la revendication 1, caractérisé en ce qu'il comprend deux éléments de fixation tridimensionnels (5) associés entre eux avec les respectives premières mâchoires (6s, 6t) opposées et serrées par un écrou (12) de manière à former un raccord structurel (4) à "5" voies.

5. Assemblage selon la revendication 1, caractérisé en ce que l'élément de fixation tridimensionnel (5) est pourvu d'une tranchée (14).

6. Assemblage selon la revendication 6, caractérisé en ce qu'il comprend deux éléments de fixation tridimensionnels (5) montés avec les respectives tranchées (14) mutuellement opposées de manière à définir, en se combinant, un raccord de fixation à bride (4).

7. Assemblage selon la revendication 1, caractérisé en ce qu'au moins deux premières mâchoires (6s, 6t) dudit élément de fixation tridimensionnel (5) sont disposées selon un angle aigu.

8. Assemblage selon la revendication 1, caractérisé en ce qu'au moins deux premières mâchoires (6s, 6t) dudit élément de fixation tridimensionnel (5) sont disposées à angle droit.

9. Assemblage selon la revendication 1, caractérisé en ce qu'au moins deux premières mâchoires (6s) d'un même élément de fixation tridimensionnel (5) sont disposées selon un angle plat.
